(19) Europäisches Patentamt
European Patent Office
Office européen des brevets

(11) **EP 4 502 663 A1**

(12) **EUROPEAN PATENT APPLICATION**
published in accordance with Art. 153(4) EPC

(43) Date of publication:
**05.02.2025 Bulletin 2025/06**

(21) Application number: **23778808.8**

(22) Date of filing: **30.01.2023**

(51) International Patent Classification (IPC):
*G02B 1/11* (2015.01)      *G02B 5/18* (2006.01)
*G02B 5/20* (2006.01)      *G02B 5/30* (2006.01)

(52) Cooperative Patent Classification (CPC):
**G02B 1/11; G02B 5/18; G02B 5/20; G02B 5/30**

(86) International application number:
**PCT/JP2023/002790**

(87) International publication number:
**WO 2023/188771 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022058051**

(71) Applicant: **Panasonic Intellectual Property
Management Co., Ltd.
Kadoma-shi, Osaka 571-0057 (JP)**

(72) Inventors:
• TAKEDA Eiji
  **Kadoma-shi, Osaka 571-0057 (JP)**
• MASUDA Keigo
  **Kadoma-shi, Osaka 571-0057 (JP)**

(74) Representative: **Grünecker Patent- und
Rechtsanwälte
PartG mbB
Leopoldstraße 4
80802 München (DE)**

(54) **OPTICAL LENS**

(57)     An optical lens is used for light in a predetermined target wavelength region. The optical lens includes a substrate and a plurality of microstructures provided on a surface of the substrate. The plurality of microstructures is arranged at intervals shorter than a shortest wavelength in the target wavelength region. The intervals vary depending on a position on the surface in accordance with a magnitude of a variation in phase profile of the optical lens.

## FIG. 8

**Description**

Technical Field

The present disclosure relates to an optical lens.

Background Art

In recent years, research and development of metalenses each having a microscopic surface structure called a metasurface has been in progress. The metasurface is a surface having a metamaterial structure that realizes an optical function that does not occur in nature. The metalens can realize an optical function equivalent to a combination of multiple optical lenses according to the related art by using a single thin flat plate structure. Accordingly, the metalens can contribute to size reduction and weight reduction of an instrument equipped with lenses, such as a camera, a LiDAR sensor, a projector, and an AR (augmented reality) display unit. Examples of the metalenses and devices using the metalenses are disclosed in PTLs 1 and 2, for instance.

PTL 1 discloses a metalens including a substrate and multiple nanostructures disposed on the substrate. In this metalens, each of the multiple nanostructures brings about an optical phase shift that varies depending on its position, and the optical phase shift of each nanostructure defines a phase profile of the metalens. The optical phase shift of each nanostructure depends on a position of the relevant nanostructure and either a size or an orientation of the nanostructure. A nanofin and a nanopillar are exemplified as examples of such a nanostructure. PTL 1 describes a concept of realizing a desired phase shift by adjusting angles to layout respective nanofins or by adjusting sizes of respective nanopillars.

PTL 2 discloses a compact lens assembly including a metalens and an electronic device including the lens assembly. The metalens disclosed in PTL 2 includes a nanostructure array and is configured to form the same phase delay profile regarding light of at least two wavelengths being included in incident light and different from each other. In this metalens, a width of each of multiple inner pillars included in the nanostructure array is appropriately determined in accordance with a required amount of phase delay in order to realize a desired phase delay profile.

Citation List

Patent Literature

PTL 1: Japanese Unexamined Patent Application Publication (Translation of PCT Application) No. 2019-516128
PTL 2: Japanese Unexamined Patent Application Publication No. 2021-71727

Summary of Invention

Technical Problem

In designing the metalens, an ideal phase profile to be realized is required to be reproduced as accurately as possible. However, the metalens of the related art has had a difficulty in accurately reproducing the ideal phase profile. In particular, it has been difficult to reproduce the ideal phase profile at a location where the phase profile varies sharply.

The present disclosure provides an optical lens that facilitates reproduction of a desired phase profile.

Solution to Problem

An optical lens according to an aspect of the present disclosure is used for light in a predetermined target wavelength region and includes a substrate and a plurality of microstructures provided on a surface of the substrate. The plurality of microstructures is arranged at intervals shorter than a shortest wavelength in the target wavelength region. The intervals vary depending on a position on the surface in accordance with a magnitude of a variation in phase profile of the optical lens.

A comprehensive or specific aspect of the present disclosure may be realized by a system, an apparatus, a method, an integrated circuit, a computer program, or a computer-readable storage medium such as a storage disk, or may be realized by any combination of a system, an apparatus, a method, an integrated circuit, a computer program, and a storage medium as such. The computer-readable storage medium may include a nonvolatile storage medium such as a CD-ROM (Compact Disc - Read Only Memory). The apparatus may be formed from one or more devices. In the case where the apparatus is formed from two or more devices, the two or more devices may be disposed in a single instrument or may be individually disposed in two or more separate instruments. In the present specification and claims, the term "device" may not only mean a single device but may also mean a system formed from multiple devices.

Advantageous Effects of Invention

According to an aspect of the present disclosure, it is possible to realize an optical lens that facilitates reproduction of a desired phase profile.

Brief Description of Drawings

[Fig. 1] Fig. 1 is a perspective view schematically illustrating an example of a metalens.
[Fig. 2] Fig. 2 is a perspective view schematically illustrating an example of a structure of one unit cell.
[Fig. 3] Fig. 3 is a diagram schematically illustrating a function of the metalens.
[Fig. 4A] Fig. 4A is a graph depicting an example of an ideal phase profile.
[Fig. 4B] Fig. 4B is a diagram illustrating an example of a phase profile realized by periodic arrangement according to the related art.
[Fig. 4C] Fig. 4C is a diagram illustrating an example of a phase profile realized by an embodiment of the present disclosure.
[Fig. 5] Fig. 5 is a diagram for explaining conditions concerning intervals of unit cells for producing a metalens that realizes a desired phase profile.
[Fig. 6A] Fig. 6A is a diagram illustrating an example of the ideal phase profile.
[Fig. 6B] Fig. 6B is a diagram illustrating a phase profile wrapped in a phase range from $-\pi$ to $\pi$.
[Fig. 6C] Fig. 6C is a diagram illustrating a sampling example for realizing the ideal phase profile.
[Fig. 7] Fig, 7 is a diagram illustrating an example of a relation between a sampling number N and diffraction efficiency.
[Fig. 8] Fig. 8 is a diagram schematically illustrating an example of the metalens.
[Fig. 9A] Fig. 9A is a diagram illustrating an ideal phase profile in the example.
[Fig. 9B] Fig. 9B is a diagram illustrating distribution of differential values of the phase profile illustrated in Fig. 9A.
[Fig. 9C] Fig. 9C is a diagram illustrating distribution of upper limits of the intervals of the microstructures.
[Fig. 10] Fig. 10 is a schematic sectional view illustrating an example of a metalens including an optical modulation layer.
[Fig. 11] Fig. 11 is a diagram illustrating an example of a metalens in which an optical modulation layer includes other multiple microstructures.

Description of Embodiments

An exemplary embodiment of the present disclosure will be described below. Each embodiment described below represents a comprehensive or specific example. Numerical values, shapes, constituents, layout positions and modes of connection of the constituents, steps, the order of the steps, and the like depicted in the following embodiment are mere examples and are not intended to restrict the present disclosure. Meanwhile, of the constituents in the following embodiment, a constituent not defined in an independent claim that represents the highest conception will be described as an optional constituent. In the meantime, the respective drawings are schematic diagrams and are not always illustrated precisely. Moreover, in the respective drawings, identical or similar constituents are denoted by the same reference signs. Overlapping explanations may be omitted or simplified as appropriate.
In the present disclosure, the term "light" is used not only for visible light (with a wavelength from about 400 nm to about 700 nm) but also for invisible light. The invisible light means electromagnetic waves included in a wavelength region of ultraviolet rays (with a wavelength from about 10 nm to about 400 nm), infrared rays (with a wavelength from about 700 nm to about 1 mm), or an electric wave (with a wavelength from about 1 mm to about 1 m). An optical lens in the present disclosure may be used not only for the visible light but also for the invisible light such as the ultraviolet rays, the infrared rays, or the electric wave.

(Underlying Knowledge Forming Basis of the Present Disclosure)

First, an example of a basic configuration of an optical lens in the present disclosure and knowledge obtained by the inventors of the present disclosure will be described.
In the following description, the optical lens may also be referred to as a "metalens". The metalens is an optical element including multiple microstructures being smaller than a wavelength of incident light and provided on its surface, and configured to realize a lens function by a phase shift attributed to those microstructures. It is possible to adjust an optical characteristic of the incident light such as a phase, an amplitude, or polarization thereof by appropriately designing shapes, sizes, directions, and layouts of the respective microstructures.

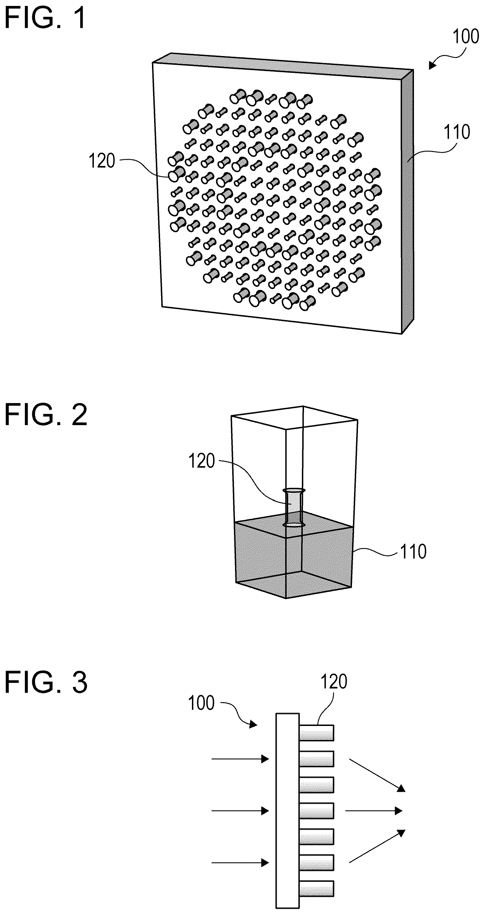

Fig. 1 is a perspective view schematically illustrating an example of the metalens. A metalens 100 illustrated in Fig. 1 includes a substrate 110 and multiple microstructures 120 provided on a surface of the substrate 110. Each of the microstructures 120 in this example is a columnar body having a shape similar to cylinder (also referred to as a "pillar"). A unit element including one microstructure 120 in the metalens 100 will be referred to as a "unit cell". The metalens 100 is an aggregate of multiple unit cells.

Fig. 2 is a perspective view schematically illustrating an example of a structure of one unit cell. The one unit cell includes a portion of the substrate 110, and one microstructure 120 projecting from the portion of the substrate 110. Each unit cell causes a phase shift of incident light in accordance with the structure of the microstructure 120.

Fig. 3 is a diagram schematically illustrating a function of the metalens 100. In Fig. 3, arrows represent examples of light beams. The metalens 100 in this example has a function to focus the incident light as with a convex lens of the related art. In the example of Fig. 3, the incident light that is incident on the substrate side of the metalens 100 is subjected to a different phase variation depending on the position by an array of the microstructures 120, thereby being focused. Shapes, widths, heights, directions, or the like of the respective microstructures 120 are appropriately determined in order to realize a desired light focusing performance. A structure of each microstructure 120 may be appropriately determined based on data indicating a phase profile supposed to be realized and on a result of an electromagnetic field simulation, for example.

The microstructures 120 may each have a sub-wavelength size (a width and a height, for example) shorter than the wavelength of the incident light on the metalens 100, and may be arranged at sub-wavelength intervals or pitches. An "interval" of the microstructures 120 is a distance between the centers of two adjacent microstructures 120 when viewed in a direction perpendicular to the surface of the substrate 110.

The metalens 100 may be designed in such a way as to realize a desired optical performance with the light in a predetermined target wavelength region. The target wavelength region is a wavelength region determined by specifications, for example. In a case where a lower limit of the target wavelength region is equal to 1 $\mu$m, for example, the size and the interval of the microstructures 120 may be set to a value shorter than 1 $\mu$m. A microstructure having such a nanoscale size less than 1 $\mu$m may be referred to as a "submicron structure" or a "nanostructure" as appropriate. In a case where the target wavelength region is equivalent to a wavelength region of an infrared range, the size and the interval of the microstructures 120 may be greater than 1 $\mu$m.

The number of pieces of the microstructures 120 provided on the surface of the metalens 100 is determined to be an appropriate number depending on a lens performance supposed to be realized. The number of pieces of the microstructures 120 is in a range from 100 to 10000, for example, but may be less than 100 or greater than 10000 in some cases.

Here, an example of a method of designing a metalens according to the related art will be briefly explained. For instance, there is the method disclosed in PTL 2 as the method of designing the metalens according to the related art. In the method disclosed in PTL 2, multiple columnar microstructures are arranged at a regular pitch from the center toward the outer periphery of the lens. A width of a microstructure at each position is determined to be an optimum value so as to realize a desired amount of phase delay. Thus, a phase profile that decreases the phase in the direction from the center to the outer periphery of the metalens is realized.

However, an investigation by the inventors of the present disclosure has revealed that there is a case where the ideal phase profile cannot be reproduced in accordance with the above-described method of changing the widths of the respective microstructures while fixing the pitch. In particular, it has been revealed that the ideal phase shift can hardly be realized at a location in the ideal phase profile where the phase varies sharply and that an improvement is required.

This problem is considered attributable to a fact that the number of the microstructures is not enough in the vicinity of an end of the lens and sufficient phase shift is therefore unavailable in the case where all of the microstructures are arranged at a regular pitch. In a case where a pitch (that is, an interval) of unit cells in a metalens is defined as $\Delta x$, a wavelength of incident light in free space is defined as $\lambda$, and a numerical aperture is defined as NA, the pitch $\Delta x$ is determined so as to satisfy the following inequality (1) according to the sampling theorem:

[Mathematical 1]

$$\Delta x < \frac{\lambda}{2NA} \qquad (1)$$

In the case where the microstructures are arranged at the regular pitch $\Delta x$ satisfying this condition, the number of pieces (that is, a sampling number) of the microstructures is prone to be excessive in the vicinity of the center of the lens. On the other hand, the sampling number is apt to be a minimum in the vicinity of the end thereof. In the case where there is only the minimum sampling number in the vicinity of the end where the phase variation is sharp, it is difficult to realize a desired light focusing function because phase reproducibility is degraded in the vicinity of the end. On the other hand, when the pitch of the microstructures is set sufficiently small in order to enhance the phase reproducibility in the vicinity of the end of the lens, the sampling number in the vicinity of the center becomes excessive. The following problems may occur if the pitch of the microstructures is small and the sampling number is excessive:

- Reduction in processing accuracy;
- Deterioration in durability of the microstructures (such as collapse of pillars); and
- An increase in process variation attributed to an increase in micro loading effect.

In particular, the aforementioned problems may be prominent in the case of producing a lens having a large area or a lens which is rotationally asymmetric.

The inventors of the present disclosure have found out the above-mentioned problems and worked on a configuration of an optical lens for solving the above-mentioned problems. As a consequence, the inventors have conceived of a possible solution of the above-mentioned problems by changing intervals of the microstructures in accordance with an ideal phase profile to be realized. A configuration of an optical lens according to an embodiment of the present disclosure will be described below.

(Embodiment)

An optical lens according to an exemplary embodiment of the present disclosure is used for light in a predetermined target wavelength region. The optical lens includes a substrate, and multiple microstructures provided on a surface of the substrate. The multiple microstructures are arranged at intervals shorter than the shortest wavelength in the target wavelength region. The intervals are determined to vary depending on a position on the surface in accordance with a phase profile to be realized by the optical lens.

Here, the "target wavelength region" is a wavelength region in which the use of the optical lens is assumed, and may be determined based on the specifications of the optical lens or on the specifications of an instrument that mounts the optical lens. The target wavelength region may include at least a portion of the wavelength region (from about 400 nm to about 700 nm) of the visible light, for example. Meanwhile, the target wavelength region may include at least a portion of the wavelength region (with the wavelength from about 10 nm to about 400 nm) of the ultraviolet rays. In the meantime, the target wavelength region may include at least a portion of the wavelength region (from about 700 nm to about 1 mm) of the infrared rays. Meanwhile, the target wavelength region may include at least a portion of the wavelength region (with the wavelength from about 1 mm to about 1 m) of the electric wave. In a certain example, the target wavelength region may include at least a portion of the wavelength region of the infrared rays from 2.5 $\mu$m to 25 $\mu$m. The wavelength region from 2.5 $\mu$m to 25 $\mu$m may suitably be used for a sensing device using the infrared rays such as a LiDAR sensor or an infrared camera. Here, the term "wavelength" in the present disclosure means a wavelength in free space unless otherwise stated.

The substrate and each microstructure may be formed from a material having transparency with respect to light in the target wavelength region. Here, the expression "having transparency" means having a characteristic of causing the incident light to pass through at transmittance greater than 50%. In a certain embodiment, the substrate 110 and each microstructure 120 may be formed from a material that causes the light in the target wavelength region to pass through at the transmittance greater than or equal to 80%.

The "interval" between the microstructures means a distance between the centers of two adjacent microstructures when viewed in a direction perpendicular to the surface of the substrate (also referred to as a "lens surface"). In the case where the shortest wavelength in the target wavelength region is equal to 2.5 $\mu$m, for example, a distance between the centers of any two microstructures located adjacent to each other out of the multiple microstructures is less than 2.5 $\mu$m. Here, since the widths of the microstructures are less than the intervals between the microstructures, the widths of the microstructures are also shorter than the shortest wavelength in the target wavelength region.

The intervals of the microstructures are determined in accordance with a phase profiled to be realized by the optical lens. The phase profile represents distribution within the lens surface of an amount of phase shift (hereinafter simply referred to as a "phase" in some cases) of exiting light with respect to incident light on the optical lens. The phase profile may be expressed by a function of the phase with respect to a position within the lens surface or a distance from an optical axis, for example. The phase represented by the phase profile varies depending on the position within the lens surface. In the present embodiment, the intervals of the microstructures are determined in such a way as to vary depending on the position on the lens surface (such as the distance from the optical axis) in accordance with the phase profile to be realized.

The intervals of the microstructures vary depending on a differential value concerning a position of the phase indicated by the phase profile. For example, in a case where an absolute value of a differential value concerning the position of the phase indicated by the phase profile at a first position on the surface of the substrate is greater than an absolute value of a differential value at a second position on the surface, an interval of microstructures at the first position may be determined to be a value smaller than an interval of microstructures at the second position. As described above, the multiple microstructures may be disposed such that the interval of the microstructures is smaller as the absolute value of the differential value concerning the position of the phase indicated by the phase profile is greater.

According to the above-described configuration, the microstructures are disposed more densely at the location in the ideal phase profile to be realized where the phase varies sharply as compared to a location therein where the phase varies gently. The above-described configuration makes it possible to reproduce the ideal phase profile more accurately at the location where the phase varies sharply. Meanwhile, it is possible to suppress excessive deposition of the microstructures at a location (such as a central part) where the phase changes gently. As a consequence, it is possible to avoid the problems including reduction in processing accuracy of the microstructures, deterioration in durability of the microstructures, an increase in process variation at the time of manufacture, and so forth.

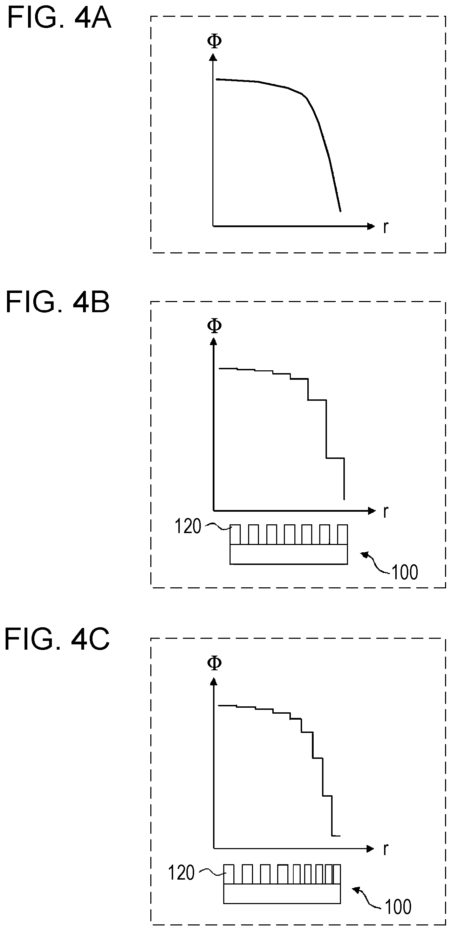

Here, the above-mentioned effects will be described further in detail with reference to Figs. 4A to 4C.

Fig. 4A is a graph depicting an example of the ideal phase profile. This phase profile represents a function of a relative phase $\Phi$ with respect to a distance r from an optical axis (such as the center axis of the optical lens) on the lens surface. In this phase profile, the phase $\Phi$ is monotonously decreased with an increase in distance r.

Fig. 4B is a diagram illustrating an example of a phase profile realized by periodic arrangement according to the related art. In this example, the multiple microstructures 120 are periodically arranged. As illustrated in Fig. 4B, this configuration cannot reproduce the ideal phase variation in the vicinity of the end of the lens where the phase varies sharply.

Fig. 4C is a diagram illustrating an example of the phase profile realized by the embodiment of the present disclosure. In the example illustrated in Fig. 4C, the respective microstructures 120 are disposed such that the intervals of the microstructures 120 are reduced in a region where the distance r from the optical axis is large. Thus, reproducibility of the phase profile is improved particularly in the vicinity of the end where the distance r is large.

As described above, according to the optical lens of the present embodiment, the intervals of the microstructures 120 are appropriately determined in accordance with a variation ratio regarding the position of the phase indicated by the ideal phase profile. In particular, the respective microstructures 120 are disposed in such a way as to reduce the interval of the microstructures at the location where the phase varies sharply. Thus, it is possible to reproduce the ideal phase profile more accurately and to improve a performance of the lens.

Next, a description will be given of a more specific example of the method of determining the intervals of the microstructures 120 in accordance with the phase profile.

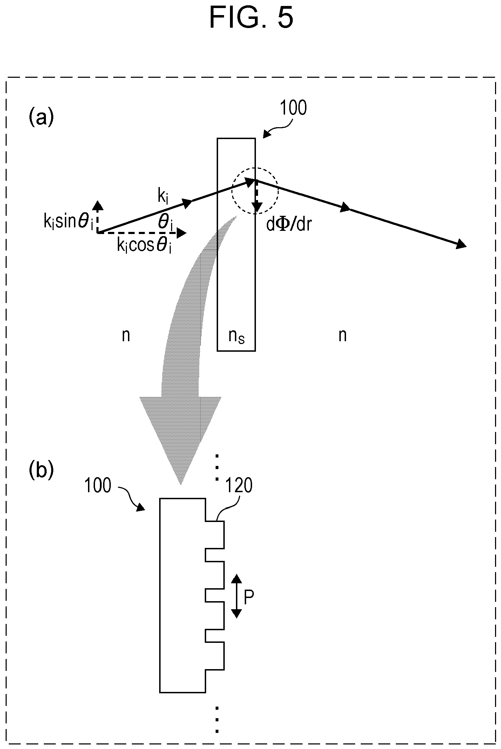

Fig. 5 is a diagram for explaining conditions concerning the intervals of the unit cells for producing the metalens that realizes a desired phase profile. An upper diagram (a) in Fig. 5 schematically illustrates an aspect in which the light incident on the metalens 100 changes its course by the lens surface. A lower diagram (b) in Fig. 5 is a schematic enlarged diagram of a region surrounded by a dashed-line circle in the upper diagram (a).

The ideal phase profile of the metalens 100 to realize the lens function is expressed by the following function $\Phi(r)$, for example:

[Mathematical 2]

$$\Phi(r) = \sum_{i=1}^{N} a_i \, r^{2i} \qquad (2)$$

Here, r is the distance from the optical axis, and $a_i$ is a prescribed coefficient.

In the example of Fig. 5, light having a wavenumber $k_i$ is incident from a medium (such as air) having a refractive index n onto the metalens 100 having a refractive index $n_s$ at an incident angle $\theta_i$. The metalens 100 may be used in combination with an image sensor in an imaging device, for example. The metalens 100 may also be used in a telescope, a microscope, or a scanning optical device. The wavenumber $k_i$ is defined as the wavenumber corresponding to the shortest wavelength $\lambda$ in the target wavelength region, and the incident angle $\theta_i$ is defined as a maximum half angle of view of the metalens 100 (that is, a maximum incident angle of the light that can be used in the device including the metalens 100). The maximum incident angle of the light stated herein may be a maximum angle of view of the device such as the imaging device, the telescope, or the microscope including the metalens 100, a maximum scanning angle of the scanning optical device including the metalens 100, and the like. Note that the usage of the metalens 100 is not limited only thereto. The multiple microstructures 120 are formed in such a way as to provide the incident light with the following wavenumber component (that is, the spatial frequency component) equal to $K_0$ at the maximum:

[Mathematical 3]

$$K_0 = \left|\frac{\mathrm{d}\Phi(r)}{\mathrm{d}r}\right| + k_i sin\theta_i = \left|\frac{\mathrm{d}\Phi(r)}{\mathrm{d}r}\right| + \frac{2\pi}{\lambda}nsin\theta_i \qquad (3)$$

A sampling an interval P of the unit cells which is minimum required for providing the unit cells with the maximum spatial frequency component $K_0$ is determined based on the sampling theorem. The sampling theorem is a theorem stating that an original signal can be restored by sampling at a frequency more than twice of a maximum frequency included in a continuous signal. According to the sampling theorem, the interval P may be determined so as to satisfy the following inequality (4):
[Mathematical 4]

$$\frac{2\pi}{P} > 2K_0 \qquad (4)$$

Therefore, the interval P(r) of the microstructures 120 at the position with the distance r from the optical axis may be determined so as to satisfy the following inequality:
[Mathematical 5]

$$P(r) < \frac{2\pi}{2\left(\left|\frac{\mathrm{d}\Phi(r)}{\mathrm{d}r}\right| + \frac{2\pi}{\lambda}nsin\theta_i\right)} \qquad (5)$$

The respective microstructures 120 can be appropriately disposed in accordance with sharpness of the phase by determining the positions of the respective microstructures 120 so as to satisfy this inequality. Thus, it is possible to improve characteristics in the region where the phase varies sharply, thereby improving light focusing efficiency. Meanwhile, the interval of the microstructures 120 can be set relatively large at a location where a variation ratio of the phase is relatively small. Accordingly, it is also possible to obtain effects including improvement in processing accuracy, reduction in processing time, improvement in durability, and the like at the time of manufacture.

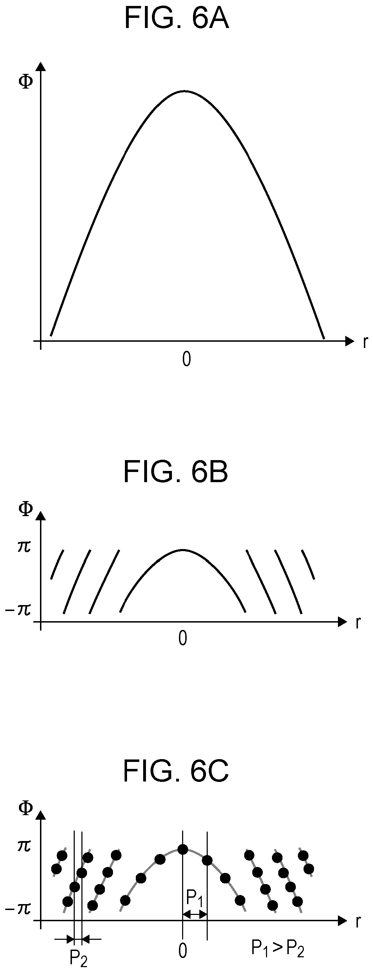

Next, a more preferable layout of the microstructures 120 will be described with reference to Figs. 6A to 6C.

Fig. 6A illustrates an example of the ideal phase profile. Fig. 6B illustrates a phase profile wrapped in a phase range from -π to π. Fig. 6C illustrates a sampling example for realizing the ideal phase profile. Black points in Fig. 6C represent examples of the positions (that is, sampling points) of the microstructures 120. As illustrated in these drawings, an appropriate number of the microstructures 120 are disposed in each of multiple sections wrapped between -π to π. Due to the sampling theorem, the microstructures 120 greater than or equal to two are disposed in a single continuous section from -π to π. In this example, sharpness (that is, the differential value) of the phase in the vicinity of the center of the lens is different from that in the vicinity of an end thereof. A variation ratio of the phase Φ with respect to a variation in position r in the vicinity of the end is larger than that in the vicinity of the center. For this reason, an interval P2 of the microstructures 120 in the vicinity of the end is smaller than an interval P1 of the microstructures 120 in the vicinity of the center. By disposing the microstructures 120 as described above, it is possible to reproduce the ideal phase profile more accurately.

Reproducibility of the phase profile is improved more as the number of pieces of the microstructures 120 included in the single continuous section from -π to π, that is, the sampling number is increased more. For example, it is possible to further improve reproducibility of the phase profile by disposing greater than or equal to three or greater than or equal to four microstructures 120 in each section.

There may be a case of low reproducibility since the wrapping phase is reproduced with two dots in the case where a difference is small between the left side and the right side of the aforementioned inequality (4). Accordingly, the expression (4) is expanded to the following expression (6) by setting N to an integer greater than or equal to 2:
[Mathematical 6]

$$\frac{2\pi}{P} > N \times K_0 \qquad (6)$$

In this case, the interval P(r) of the microstructures 120 at the position with the distance r from the optical axis is determined so as to satisfy the following expression (7):
[Mathematical 7]

$$P(r) < \frac{2\pi}{N\left(\left|\frac{\mathrm{d}\varphi(r)}{\mathrm{d}r}\right| + \frac{2\pi}{\lambda}n\sin\theta_i\right)} \qquad (7)$$

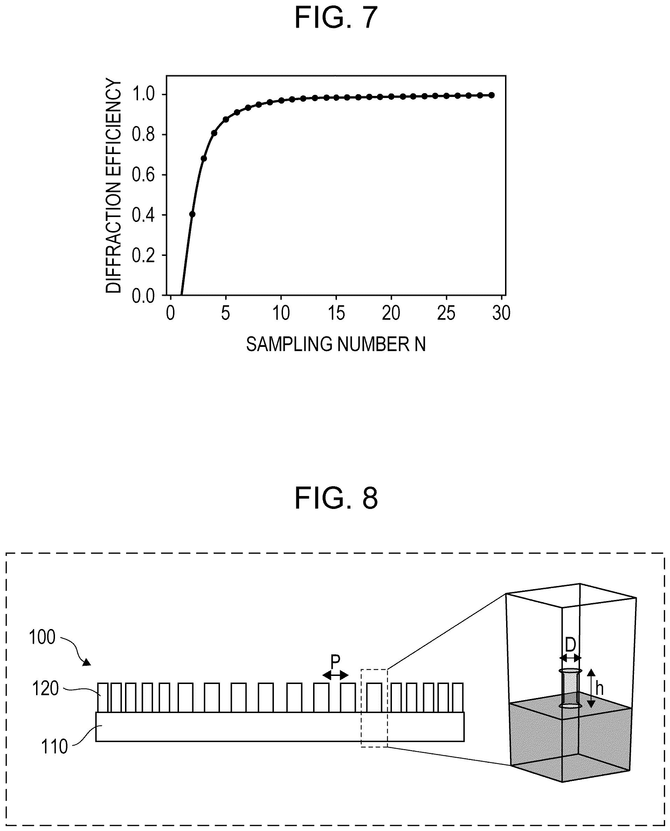

Fig. 7 is a diagram illustrating an example of a relation between the sampling number N and diffraction efficiency. A relational expression $\eta$ = sinc$^2$(1/N) has been known as the relation between the sampling number N and diffraction efficiency $\eta$. The practical diffraction efficiency $\eta$ is greater than or equal to 80%, for example. Fig. 7 reveals that the diffraction efficiency is greater than or equal to 80% in the case where N $\geq$ 4 holds true. Accordingly, N may be set to an integer greater than or equal to 4, for instance. In a case of N = 4, for example, the interval P(r) of the microstructures 120 satisfies the following expression (8):
[Mathematical 8]

$$P(r) < \frac{2\pi}{4\left(\left|\frac{\mathrm{d}\varphi(r)}{\mathrm{d}r}\right| + \frac{2\pi}{\lambda}n\sin\theta_i\right)} \qquad (8)$$

It is possible to further suppress the reduction in light focusing performance in the vicinity of the end, where the phase varies sharply, by disposing the respective microstructures 120 in such a way as to satisfy the expression (8).
Here, if the sampling number N is too large, there is a possibility to cause an undesirable problem such as reduction in processing accuracy, deterioration in durability, or an increase in process variation at the time of manufacture as mentioned above. For this reason, a lower limit may be provided to the interval P(r) of the microstructures 120. For instance, the value on the right side of the expression (7) in the case where N = 8, N = 10, or the like may be defined as the lower limit of P(r). For example, in a case where the value on the condition of N = 8 is defined as the lower limit, the interval P(r) of the microstructures 120 satisfies the following expression (9):
[Mathematical 9]

$$P(r) > \frac{2\pi}{8\left(\left|\frac{\mathrm{d}\Phi(r)}{\mathrm{d}r}\right| + \frac{2\pi}{\lambda}n\sin\theta_i\right)} \qquad (9)$$

The problem such as reduction in processing accuracy, deterioration in durability, or an increase in process variation at the time of manufacture can be effectively suppressed by disposing the respective microstructures 120 so as to satisfy the expression (9).
The interval P(r) of the microstructures 120 may be determined so as to satisfy both the expression (8) and the expression (9). According to this configuration, it is possible to achieve both realization of the ideal phase profile in the vicinity of the end of the lens and manufacturing advantages.

(Example)

Next, an example of the metalens 100 will be described.
Fig. 8 is a diagram schematically illustrating an example of the metalens 100. In this example, the substrate 110 and the multiple microstructures 120 are formed from the same material. The substrate 110 and the respective microstructures 120 are formed from a material that contains silicon having a crystal plane orientation (100) as a major ingredient. Here, the crystal plane orientation of silicon may be (110) or (111) instead. In the meantime, a material other than silicon may be used instead.
A thickness of the substrate 110 of the metalens 100 is equal to 500 $\mu$m. A shape of the substrate 110 is a square shape as illustrated in Fig. 1, and its size is 8 mm $\times$ 8 mm. The multiple microstructures 120 area arranged within a circular region at a diameter of 8 mm on the surface of the substrate 110. Fig. 8 schematically illustrates a section of a certain portion of the metalens 100.
Each of the microstructures 120 illustrated in Fig. 8 is a circular cylindrical pillar. The target wavelength region is equal to 10.6 $\mu$m. A width D of each microstructure 120 is in a range from 1 $\mu$m to 3 $\mu$m, which is determined in accordance with a target value of the phase at the relevant position. A height of each microstructure 120 is equal to 7 $\mu$m. The maximum angle of view of the metalens 100 is set to $\pm$30° (that is, the maximum half angle of view being equal to 30°). The microstructures 120 are two-dimensionally disposed as illustrated in Fig. 1. The microstructures 120 are periodically disposed at the interval satisfying the above-mentioned expression (5) from the center toward the end. Note that these numerical values are mere examples and may be appropriately adjusted depending on the usage or the purpose of the metalens 100.

The metalens 100 may be produced by using general semiconductor manufacturing techniques such as lithography. For example, the metalens 100 may be produced in accordance with the following method. First, a silicon substrate in which the crystal plane orientation of its principal surface is the (100) plane is prepared as the substrate 110. Next, a positive resist is applied to the principal surface of the silicon substrate in accordance with a method such as a spin-coating method. Subsequently, a desired location thereof is irradiated with light or an electron beam and then undergoes a development process. Thus, the resist at the location irradiated with the light or the electron beam is removed. This silicon substrate is subjected to etching by adopting a reactive ion etching technique or the like while using an etching gas such as $SF_6$ gas. Hence, the principal surface of the silicon substrate at the location deprived of the resist is etched off. Thereafter, the resist remaining on the principal surface of the silicon substrate is removed in a wet process using a resist stripping solution and the like or in a dry process using $O_2$ ashing and the like. After these steps, it is possible to produce the metalens 100 provided with the substrate 110 and the respective microstructures 120.

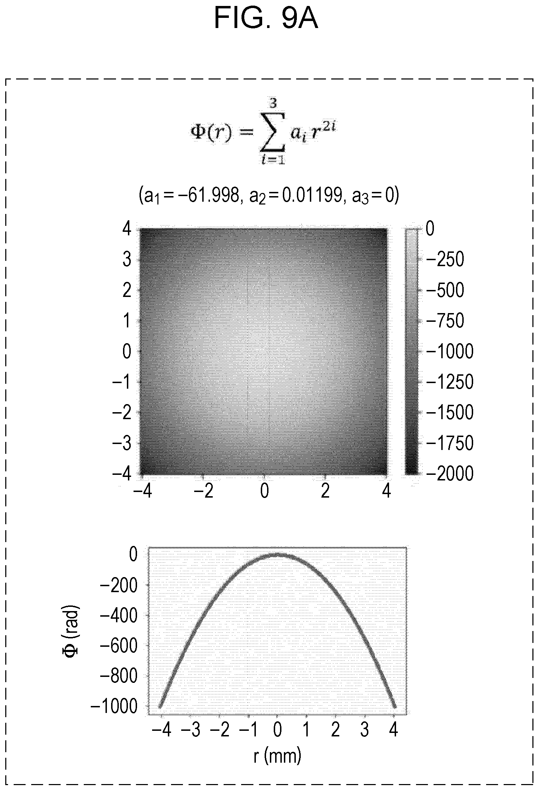

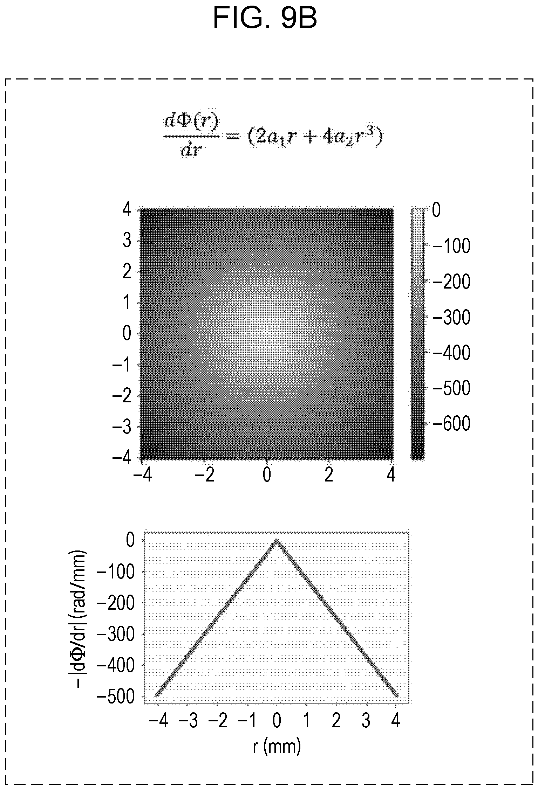

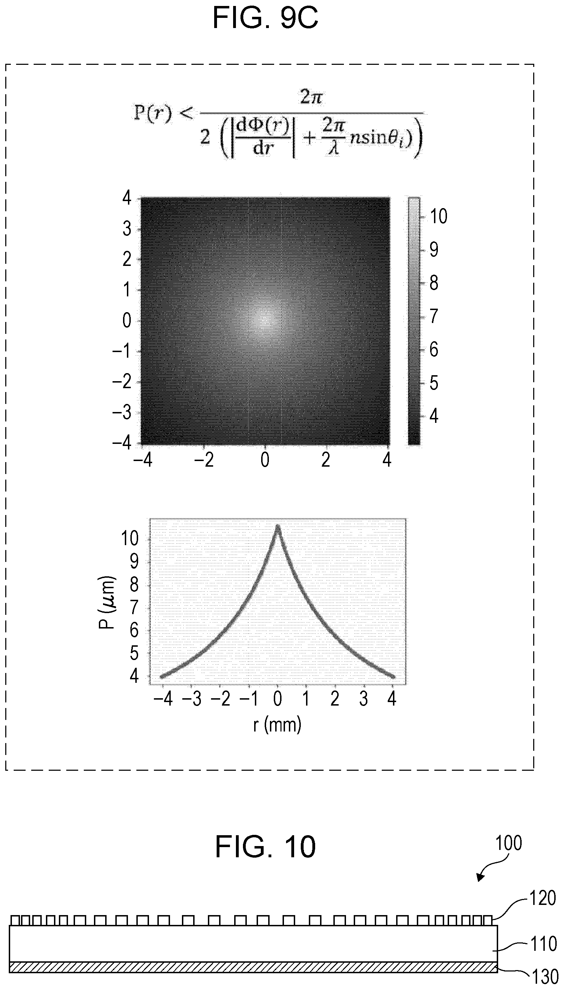

Fig. 9A is a diagram illustrating the ideal phase profile in the present example. Fig. 9B is a diagram illustrating distribution of the differential values of the phase profile illustrated in Fig. 9A. Fig. 9C is a diagram illustrating distribution of upper limits of the intervals of the microstructures 120. In each of these drawings, an upper diagram illustrates two-dimensional distribution of the respective values within the lens surface, and a lower diagram illustrates a dependency on a coordinate r that represents the distance from the optical axis within the lens surface. Fig. 9B illustrates distribution of sign-inverted absolute values of the values obtained by differentiating the ideal phase profile $\Phi(r)$ with respect to the coordinate r. As illustrated in Fig. 9B, the phase variation gradually becomes sharper toward the end of the lens. Accordingly, as illustrated in Fig. 9C, the intervals of the microstructures 120 are set to smaller values toward the end of the lens. In the example illustrated in Fig. 9C, the interval of the microstructures 120 is set to a value smaller than 11 $\mu$m in the vicinity of the center of the lens, or set to a value smaller than 4 $\mu$m in the vicinity of the end of the lens. Hence, the microstructures 120 are disposed more densely at a location where the phase varies more sharply. Characteristics close to the ideal phase profile can be realized by the above-described structure.

(Modified Example)

Next, a modified example of the metalens 100 will be described.

In the above-described example, each microstructure 120 is a projecting body having a circular cylindrical shape. However, each microstructure 120 may have a shape other than the circular cylinder. For example, each microstructure 120 may be a columnar body having such a shape as an elliptic cylinder other than the circular cylinder, or a polygonal prism. Alternatively, each microstructure 120 may be a conical or pyramidal body having such a shape as an elliptic cone (inclusive of a circular cone) or a polygonal pyramid. Moreover, each microstructure 120 is not limited only to the projecting body but may also be a recessed body. The projecting body or the recessed body constituting the microstructure 120 may take on any structure including the columnar body having the shape of the elliptic cylinder or the polygonal prism, the conical or pyramidal body having the shape of the elliptic cone or the polygonal pyramid, and the like.

In the above-described example, the substrate 110 and each of the multiple microstructures 120 are formed from the same material. However, these constituents may be formed from different materials. In order to suppress unnecessary reflection or refraction between the substrate 110 and the array of the multiple microstructures 120, a difference between the refractive index of the substrate 110 and the refractive index of each of the multiple microstructures 120 may be less than or equal to 10%, less than or equal to 5%, or less than or equal to 3% of the smallest refractive index out of the refractive index of the substrate 110 and the refractive index of each of the multiple microstructures 120.

The substrate 110 and each of the multiple microstructures 120 may be formed from a material containing, as a major ingredient, at least one selected from the group consisting of silicon, germanium, chalcogenides, chalcohalides, zinc sulfide, zinc selenide, fluoride compounds, thallium halides, sodium chloride, potassium chloride, potassium bromide, cesium iodide, and plastics (such as polyethylene), for example. Here, the "major ingredient" means an ingredient having the largest content ratio expressed in mole percentage in the material. In the case where the substrate 110 and each of the multiple microstructures 120 are formed from the above-mentioned material, it is possible to increase the transmittance of infrared rays from 2.5 $\mu$m to 25 $\mu$m, for example.

An AR (Anti-Reflection) function film may additionally be formed in order to improve the transmittance. Besides the AR function film, various optical modulation layers having an optical modulation function may be provided to the metalens 100.

Fig. 10 is a schematic sectional view illustrating an example of the metalens 100 including an optical modulation layer 130. The metalens 100 in this example includes the optical modulation layer 130 having the optical modulation function, which is located on a surface of the substrate 110 on the opposite side from the surface provided with the microstructures 120. The optical modulation layer 130 may have an anti-reflection function against the incident light or may have other functions. For example, the optical modulation layer 130 may have any of functions as a high-pass filter, a low-pass filter, and a band-pass filter which allow passage of only the light in the target wavelength region. Meanwhile, the optical modulation layer 130 may be a polarizing filter having a function to allow passage of only specific polarized light out of the incident light. In the meantime, the optical modulation layer 130 may be a filter having a function to attenuate or amplify a transmission intensity of the incident light in a specific wavelength region. The optical modulation layer 130 may be an ND (Neutral Density) filter. The optical modulation layer 130 may have a function to deflect the incident light at a specific angle. The optical modulation layer 130 may be formed from a single layer or multiple layers depending on the desired optical modulation function. Meanwhile, the optical modulation layer 130 can be formed by using a film-forming method such as a vacuum vapor deposition method or a sputtering method.

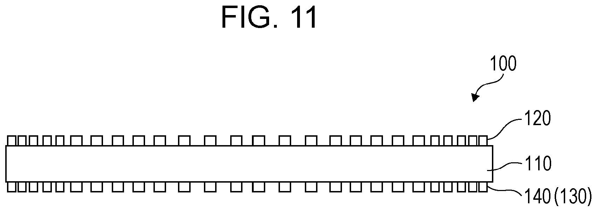

Fig. 11 is a diagram illustrating an example of the metalens 100 in which the optical modulation layer 130 includes other multiple microstructures 140 different from the microstructures 120. In this example, one of surfaces of the substrate 110 is provided with the array of the microstructures 120 while the other surface of the substrate 110 is provided with an array of the other microstructures 140. Each of the other microstructures 140 may be a projecting body or a recessed body. The projecting body or the recessed body may be a conical or pyramidal body having such a shape as an elliptic cone or a polygonal pyramid, or may be a columnar body having such a shape as an elliptic cylinder or a polygonal prism. Shapes, sizes, and layouts of the other microstructures 140 may be different from the shapes, the sizes, and the layouts of the microstructures 120. The other microstructures 140 can be produced in accordance with the same method as the production processes of the respective microstructures 120 discussed in the above-described embodiment. As in this example, provision of the arrays of the microstructures (that is, the metasurfaces) on both sides of the substrate 110 makes it easier to realize a lens function that might be difficult to be attained only on one side.

Industrial Applicability

The optical lens of the present disclosure is widely applicable to an instrument adopting a lens, examples of which include a camera, a LiDAR sensor, a projector, an AR display unit, a telescope, a microscope, a scanning optical device, and so forth.

Reference Signs List

100    metalens
110    substrate
120    microstructure
130    optical modulation layer
140    microstructure

**Claims**

1.    An optical lens used for light in a predetermined target wavelength region, comprising:

a substrate; and
a plurality of microstructures provided on a surface of the substrate, wherein
the plurality of microstructures is arranged at intervals shorter than a shortest wavelength in the target wavelength region, and
the intervals vary depending on a position on the surface in accordance with a magnitude of a variation in phase profile of the optical lens.

2.    The optical lens according to claim 1, wherein the intervals vary depending on a differential value concerning a position of a phase indicated by the phase profile.

3.    The optical lens according to claim 2, wherein, in a case where an absolute value of a differential value of the phase indicated by the phase profile at a first position on the surface is greater than an absolute value of a differential value at a second position on the surface, an interval of microstructures at the first position is smaller than an interval of microstructures at the second position.

4.    The optical lens according to any one of claims 1 to 3, wherein, in a case where a distance from an optical axis on the surface is defined as r, a function of the phase indicated by the phase profile with respect to the distance r is defined as $\Phi(r)$, the shortest wavelength in the target wavelength region is defined as $\lambda$, a refractive index of a medium around the optical lens is defined as n, and a maximum angle of view of the optical lens is defined as $\pm\theta_i$, an interval P(r) of microstructures at a position of the distance r satisfies

[Mathematical 1]

$$P(r) < \frac{2\pi}{2\left(\left|\frac{d\Phi(r)}{dr}\right| + \frac{2\pi}{\lambda}n\sin\theta_i\right)}.$$

5. The optical lens according to claim 4, wherein the interval P(r) satisfies

$$P(r) < \frac{2\pi}{4\left(\left|\frac{d\Phi(r)}{dr}\right| + \frac{2\pi}{\lambda}nsin\theta_i\right)}$$

6. The optical lens according to claim 4 or 5, wherein the interval P(r) satisfies

[Mathematical 3]

$$P(r) > \frac{2\pi}{8\left(\left|\frac{d\Phi(r)}{dr}\right| + \frac{2\pi}{\lambda}nsin\theta_i\right)}$$

7. The optical lens according to any one of claims 1 to 6, wherein

each of the plurality of microstructures is a projecting body or a recessed body, and
the projecting body or the recessed body is a conical or pyramidal body having a shape of an elliptic cone or a polygonal pyramid or a columnar body having a shape of an elliptic cylinder or a polygonal prism.

8. The optical lens according to any one of claims 1 to 7, wherein the substrate and each of the plurality of microstructures have transparency with respect to light in the target wavelength region.

9. The optical lens according to any one of claims 1 to 8, wherein a difference between a refractive index of the substrate and a refractive index of each of the plurality of microstructures is less than or equal to 10% of a refractive index being smallest of the refractive index of the substrate and the refractive index of each of the plurality of microstructures.

10. The optical lens according to any one of claims 1 to 9, wherein the substrate and each of the plurality of microstructures are formed from an identical material.

11. The optical lens according to any one of claims 1 to 10, wherein the target wavelength region includes at least a portion of a wavelength region of infrared rays greater than or equal to 2.5 μm and less than or equal to 25 μm.

12. The optical lens according to any one of claims 1 to 11, wherein the substrate and each of the plurality of microstructures are formed from a material containing, as a major ingredient, at least one selected from the group consisting of silicon, germanium, chalcogenides, chalcohalides, zinc sulfide, zinc selenide, fluoride compounds, thallium halides, sodium chloride, potassium chloride, potassium bromide, cesium iodide, and plastics.

13. The optical lens according to any one of claims 1 to 12, wherein

the optical lens is formed from a material containing silicon as a major ingredient, and
a crystal plane orientation of the silicon is (100), (110), or (111).

14. The optical lens according to any one of claims 1 to 13, further comprising:
an optical modulation layer having an optical modulation function and being located on an opposite side surface from the surface of the substrate.

**15.** The optical lens according to any one of claims 1 to 14, wherein

the optical modulation layer includes another plurality of microstructures,
each of the other plurality of microstructures is a projecting body or a recessed body, and
the projecting body or the recessed body is a conical or pyramidal body having a shape of an elliptic cone or a polygonal pyramid or a columnar body having a shape of an elliptic cylinder or a polygonal prism.

**16.** The optical lens according to claim 14 or 15, wherein the optical modulation layer has an anti-reflection function against incident light.

**17.** The optical lens according to any one of claims 14 to 16, wherein the optical modulation layer has any of functions as a high-pass filter, a low-pass filter, and a band-pass filter which allow passage of only the light in the target wavelength region.

**18.** The optical lens according to any one of claims 14 to 17, wherein the optical modulation layer has a function to allow passage of only specific polarized light out of incident light.

**19.** The optical lens according to any one of claims 14 to 18, wherein the optical modulation layer has a function to attenuate or amplify a transmission intensity of incident light in a specific wavelength region.

**20.** The optical lens according to any one of claims 14 to 19, wherein the optical modulation layer has a function to deflect incident light at a specific angle.

FIG. 1

FIG. 2

FIG. 3

FIG. 4A

FIG. 4B

FIG. 4C

# FIG. 5

(a)

100

$k_i$

$k_i \sin\theta_i$

$\theta_i$

$k_i \cos\theta_i$

$d\Phi/dr$

n          $n_s$          n

(b)

100          120

P

## FIG. 6A

## FIG. 6B

## FIG. 6C

# FIG. 7

# FIG. 8

## FIG. 9A

$$\Phi(r) = \sum_{i=1}^{3} a_i\, r^{2i}$$

$(a_1 = -61.998, a_2 = 0.01199, a_3 = 0)$

# FIG. 9B

$$\frac{d\Phi(r)}{dr} = (2a_1 r + 4a_2 r^3)$$

# FIG. 9C

$$P(r) < \frac{2\pi}{2\left(\left|\dfrac{d\Phi(r)}{dr}\right| + \dfrac{2\pi}{\lambda}n\sin\theta_i\right)}$$

# FIG. 10

# FIG. 11

100

120

110

140 (130)

<div align="center">**INTERNATIONAL SEARCH REPORT**</div>

| International application No. |
|---|
| **PCT/JP2023/002790** |

| | |
|---|---|
| **A.** | **CLASSIFICATION OF SUBJECT MATTER** |
| | *G02B 1/11*(2015.01)i; *G02B 5/18*(2006.01)i; *G02B 5/20*(2006.01)i; *G02B 5/30*(2006.01)i<br>FI:   G02B5/18; G02B1/11; G02B5/20; G02B5/30 |

According to International Patent Classification (IPC) or to both national classification and IPC

| | |
|---|---|
| **B.** | **FIELDS SEARCHED** |

Minimum documentation searched (classification system followed by classification symbols)

   G02B1/11; G02B5/18; G02B5/20; G02B5/30

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2015-87431 A (TOSHIBA CORP) 07 May 2015 (2015-05-07) | 1-2 |
| | paragraphs [0013], [0027], [0029], fig. 8 | |
| Y | paragraphs [0013], [0027], [0029], fig. 8 | 7-20 |
| A | paragraphs [0013], [0027], [0029], fig. 8 | 3-6 |
| Y | JP 2019-516128 A (PRESIDENT AND FELLOWS OF HARVARD COLLEGE) 13 June 2019 (2019-06-13) | 7-20 |
| | paragraphs [0050], [0061], [0083], [0101]-[0110], [0112], [0115], fig. 14A-14I | |
| A | paragraphs [0050], [0061], [0083], [0101]-[0110], [0112], [0115], fig. 14A-14I | 3-6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/002790**

| Patent document cited in search report | | | Publication date (day/month/year) | Patent family member(s) | Publication date (day/month/year) |
|---|---|---|---|---|---|
| JP | 2015-87431 | A | 07 May 2015 | US 2015/0115383 A1 paragraphs [0029], [0045], [0045], fig. 8A-8B | |
| JP | 2019-516128 | A | 13 June 2019 | US 2019/0154877 A1 paragraphs [0143], [0155], [0178], [0198]-[0207], [0210], [0213], fig. 14A-14I WO 2017/176921 A1 EP 3440484 A1 CA 3020261 A1 KR 10-2018-0124106 A SG 11201808772W A CN 109196387 A | |

## EP 4 502 663 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019516128 W
- JP 2021071727 A